# FASCICULE DE BREVET EUROPEEN

(11) **EP 1 765 623 B1**
(45) Date de publication et mention de la délivrance du brevet: **20.01.2010**
(21) Numéro de dépôt: 05778194.0
(22) Date de dépôt: 20.06.2005
(51) Int. Cl.: B60J 7/02, B60J 7/04, B60J 5/06, B60P 3/42

(54) **OUVRANT DE VEHICULE AUTOMOBILE POURVU D'UN MECANISME D'OUVERTURE ET VEHICULE CORRESPONDANT**
MIT ÖFFNUNGSMECHANISMUS AUSGESTATTETES KRAFTFAHRZEUGÖFFNUNGSPANEEL UND DAZUGEHÖRIGES FAHRZEUG
MOTOR VEHICLE OPENING PANEL WHICH IS EQUIPPED WITH AN OPENING MECHANISM, AND CORRESPONDING VEHICLE

(30) Priorité: 25.06.2004 FR 0407000
(43) Date de publication de la demande: 28.03.2007
(73) Titulaire: RENAULT S.A.S., 92100 Boulogne Billancourt (FR)
(72) Inventeur: LEROYER, Bruno, F-78910 ORGERUS (FR)
(86) Numéro de dépôt international: PCT/FR2005/050467
(87) Numéro de publication internationale: WO 2006/008404

(56) Documents cités:
- EP-A- 1 234 755
- FR-A- 2 822 757
- US-A- 4 272 121
- US-A1- 2002 067 054
- US-A1- 2004 070 234
- US-B1- 6 505 878

## Description

L'invention concerne un ouvrant de véhicule automobile obturant une ouverture et pourvu d'un mécanisme d'ouverture, et un véhicule pourvu d'un tel ouvrant.

Les ouvrants de pavillon classiques des véhicules automobiles de tourisme sont montés sur quatre chariots par l'intermédiaire d'articulations. Ces chariots circulent sur quatre rails longitudinaux dissimulés dans la surface supérieure du pavillon et dont les extrémités avant sont coudées vers l'intérieur du véhicule de manière à permettre un dégagement vertical de l'ouvrant lors de son ouverture. L'ouvrant peut alors coulisser et être déplacé au dessus de la partie fixe du pavillon, permettant ainsi de libérer une large ouverture. En raison des quatre chariots articulés et quatre rails nécessaires, cette solution est toutefois relativement complexe et coûteuse.

Certains véhicules utilitaires comprennent un ouvrant à l'arrière du pavillon, à proximité de la porte battante arrière. Cet ouvrant, encore appelé girafon, forme en position fermée une partie du pavillon du véhicule et éventuellement le haut de la paroi transversale arrière du véhicule. Il est articulé sur le pavillon de manière à pouvoir tourner autour d'un axe transversal au véhicule, et est maintenu en position ouverte par une barrette de soutien avec un cran ou une barrette de soutien télescopique dont une extrémité est solidaire de la structure du véhicule. L'ouverture obtenue est toutefois peu importante, le girafon étant maintenu ouvert dans une position entrebâillée, de sorte qu'il reste en permanence sensiblement à la verticale d'une majeure partie de l'ouverture ménagée. Il n'est donc pas possible de placer sur le plancher des objets longs et épais qui dépassent sensiblement du véhicule pour être stockés dans ce dernier, l'entrebâillement de girafon ne permettant qu'une ouverture assez étroite. Par ailleurs, il est difficile d'augmenter l'angle d'ouverture des girafons actuels en raison des problèmes de résistance à la pénétration à l'air en roulage du véhicule. Sur certains véhicules, le girafon peut être démonté, mais il doit alors être stocké dans le véhicule.

Un autre système décrit dans le document FR-2 803 565 consiste à faire pivoter la partie arrière du pavillon autour d'un axe transversal afin de l'amener dans une position sensiblement verticale derrière les sièges avant. Cette solution est toutefois assez complexe et nécessite une modification conséquente de la partie arrière du véhicule.

L'invention vise à pallier ces inconvénients en proposant un ouvrant et son mécanisme d'ouverture permettant d'améliorer l'accès au chargement, d'agrandir l'espace de chargement pour transporter des objets longs ou volumineux dépassant du véhicule. L'ouvrant selon l'invention présente l'avantage d'être simple et peu coûteux, et de ne pas nécessiter de modifications de la structure du véhicule sur lequel il est installé.

Le document EP 1234755A décrit un ouvrant de véhicule automobile destiné à obturer une ouverture du pavillon et pourvu d'un mécanisme d'ouverture apte à le déplacer entre une position fermée dans laquelle il obture complètement l'ouverture, et une position ouverte en avant de la position fermée, dans laquelle il libère au moins partiellement le dessus de l'ouverture en avant, où le mécanisme d'ouverture comprend :
- deux rails longitudinaux avant s'étendant depuis un bord transversal de l'ouverture, ou à proximité de ce dernier, en s'éloignant de l'ouverture, les rails avant s'étendant sensiblement dans un même plan sensiblement horizontal sur une longueur suffisante pour permettre le déplacement de l'ouvrant entre les positions fermée et ouverte,
- deux galets avant coulissant dans les rails avant, et montés rigidement sur l'ouvrant.

A cet effet, l'objet de l'invention concerne un ouvrant de véhicule automobile, destiné à obturer une ouverture du pavillon et pourvu d'un mécanisme d'ouverture apte à le déplacer entre une position fermée dans laquelle il obture complètement l'ouverture, et une position ouverte en avant de la position fermé, dans laquelle il libère au moins partiellement le dessus de l'ouverture en avant, **caractérisé en ce que** le mécanisme d'ouverture comprend :
- deux. rails longitudinaux avant s'étendant depuis un bord transversal de l'ouverture, ou à proximité de ce dernier, en s'éloignant de l'ouverture, les rails avant s'étendant sensiblement dans un même plan sensiblement horizontal sur une longueur suffisante pour permettre le déplacement de l'ouvrant entre les positions fermée et ouverte,
- deux chariots avant coulissant dans les rails avant, et montés rigidement sur l'extrémité avant de l'ouvrant, leur partie coulissant dans les rails étant située en avant de l'extrémité avant de l'ouvrant, les chariots avant guidant l'extrémité avant de l'ouvrant avec un débattement vertical lors du passage de la position fermée à la position ouverte,
- des moyens de guidage arrière en débattement longitudinal et vertical du bord transversal arrière de l'ouvrant lors du passage de la position fermée à la position ouverte.

Les directions avant et arrière sont relatives aux directions d'ouverture et de fermeture de l'ouvrant respectivement. Elles peuvent correspondre indifféremment à la direction avant ou arrière d'un véhicule.

La réalisation des rails et chariots avant selon l'invention est ainsi simplifiée, ces derniers ne présentant pas de parties courbées et de liaison articulée avec l'ouvrant, respectivement. La disposition de la partie des chariots avant coulissant dans les rails en avant de l'extrémité de l'ouvrant permet à l'ouvrant de passer au dessus des rails avant du véhicule. L'ouverture obtenue est suffisamment dégagée pour permettre le passage d'objets posés verticalement sur le plancher du véhicule, ou d'objets longs et épais posés inclinés sur le plancher.

Avantageusement, les chariots avant sont sensiblement rectilignes et s'étendent sensiblement dans le prolongement de l'ouvrant.

Dans un mode de réalisation, les moyens de guidage arrière comprennent :
- deux rails longitudinaux arrière s'étendant depuis l'autre bord transversal de l'ouverture par rapport aux rails avant, l'extrémité arrière des rails arrière étant inclinée vers le bas et l'arrière,
- deux chariots arrière coulissant dans les rails arrière, et montés articulés sur l'extrémité arrière de l'ouvrant.

La courbure de l'extrémité arrière des rails arrière provoque ainsi une rotation de l'ouvrant par rapport à la partie des chariots avant coulissant dans les rails avant, avec un débattement vertical et longitudinal lors du passage entre les positions fermée et ouverte.

Avantageusement, chaque chariot arrière présente une forme sensiblement triangulaire dont deux sommets sont pourvus d'un galet coulissant dans un rail arrière et le troisième sommet est articulé sur l'extrémité arrière de l'ouvrant.

De préférence, plus particulièrement, les chariots arrière sont articulés sur des pattes solidaires de l'extrémité arrière de l'ouvrant, saillant de la face inférieure de ce dernier.

Avantageusement, le mécanisme d'ouverture est pourvu d'un système de verrouillage en position ouverte de manière à éviter une fermeture brutale de l'ouvrant lors du roulage du véhicule.

De préférence, dans le mode de réalisation comportant les moyens de guidage décrits plus haut, le système de verrouillage est formé d'au moins un élément de retenue fixé sous l'extrémité avant d'un rail arrière et supporté par un élément formant ressort le maintenant en saillie à l'intérieur du rail par un orifice prévu à cet effet, chaque chariot arrière étant conçu de manière à venir en prise avec l'élément de retenue.

Avantageusement, l'extrémité arrière de l'ouvrant est pourvue d'un système de fixation apte à coopérer avec le véhicule en position fermée. Ce système permet d'éviter une ouverture non souhaitée lors d'un freinage brusque du véhicule tout en protégeant ce dernier des intrusions.

L'invention concerne également un véhicule pourvu d'un ouvrant selon l'invention destiné à obturer une ouverture située à proximité de son extrémité arrière, dans lequel les rails avant sont fixés sur le pavillon de part et d'autre de l'ouvrant, et s'étendent depuis le bord transversal avant de l'ouverture, ou à proximité de ce dernier, vers l'avant du véhicule.

Avantageusement, les moyens de guidage arrière sont conçus de manière à relier l'ouvrant à la structure du véhicule de part et d'autre de l'ouverture, depuis le bord transversal arrière de l'ouverture vers l'avant du véhicule de sorte qu'un déplacement de l'ouvrant de l'arrière vers l'avant du véhicule libère l'accès à l'ouverture.

Avantageusement, le bord transversal arrière de l'ouvrant est adjacent au bord supérieur d'une paroi latérale transversale verticale ouvrante du véhicule. Cette disposition est particulièrement utile pour les véhicules utilitaires.

L'invention est maintenant décrite en référence aux dessins annexés, non limitatifs, dans lesquels :
- la figure 1 est une représentation schématique en perspective de l'arrière d'un véhicule pourvu d'un ouvrant selon l'invention,
- la figure 2 est une vue de côté montrant un rail avant du mécanisme d'ouverture et l'ouvrant selon l'invention en position ouverte, la figure 3 représentant la même vue, l'ouvrant étant en position fermée,
- les figures 4 et 5 sont des vues de côté montrant le même ouvrant que la figure 3 et un rail arrière du mécanisme d'ouverture, l'ouvrant étant en position ouverte et fermée respectivement.

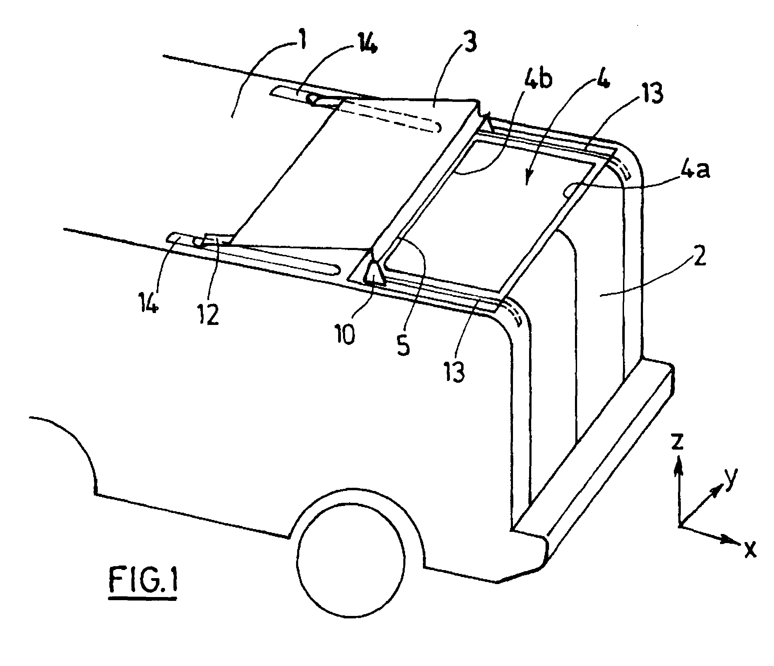

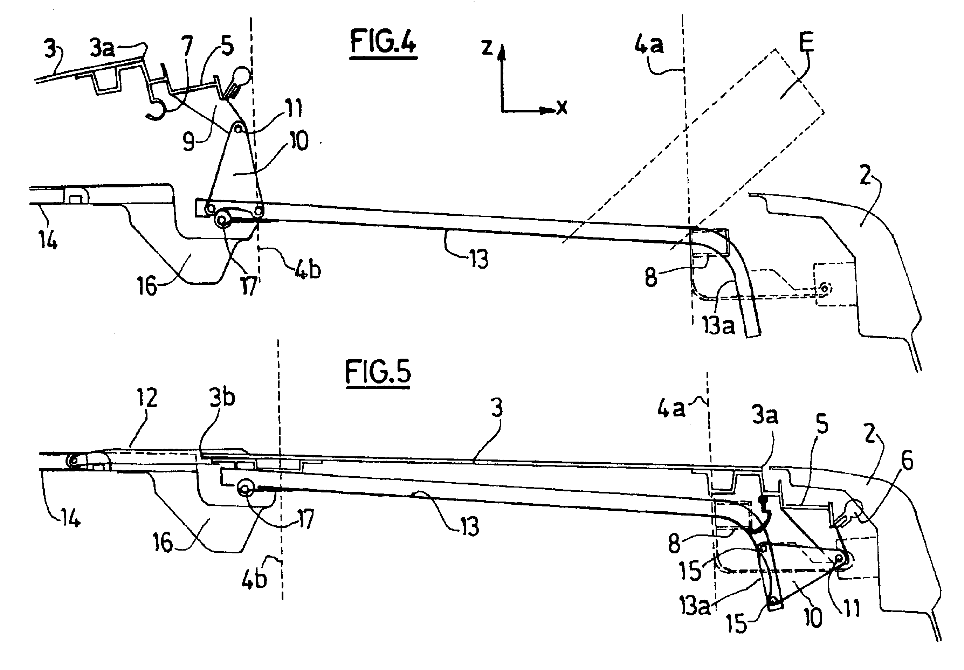

Sur la figure 1, sont visibles le pavillon 1 et une porte battante arrière 2 d'un véhicule automobile. Sur les figures 4 et 5, seule la partie supérieure de la porte battante est représentée.

Dans la suite de la description, on définit par X, Y, Z les directions longitudinale, transversale et verticale du véhicule automobile. Sur les figures, la direction X est dirigée vers l'arrière du véhicule. Dans l'exemple décrit, les termes avant et arrière se réfèrent à l'avant et l'arrière du véhicule respectivement, l'ouvrant s'ouvrant vers l'avant du véhicule.

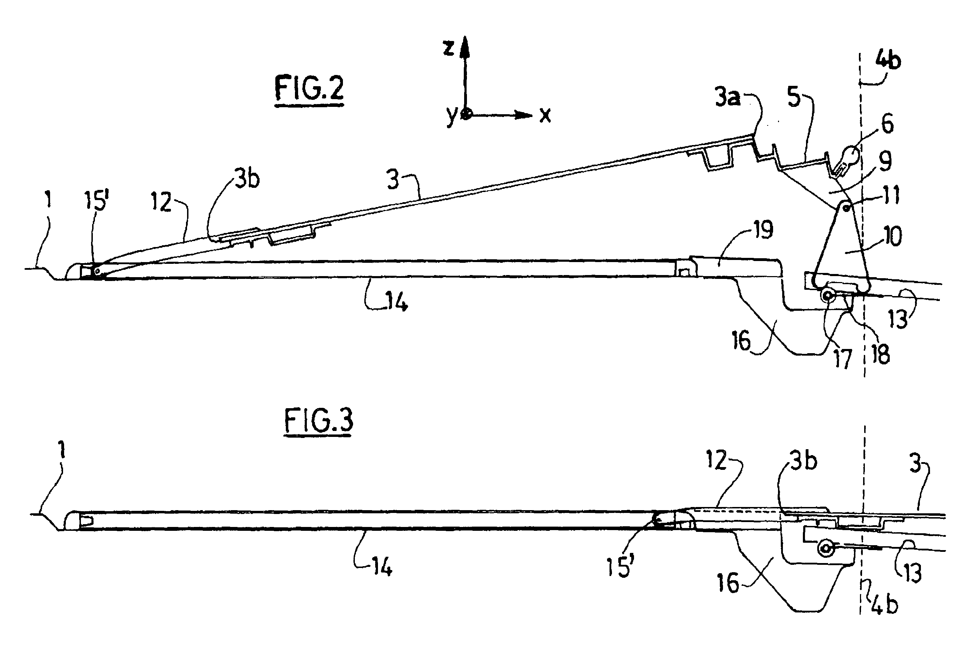

A proximité immédiate de la porte battante arrière 2, le pavillon est pourvu d'un ouvrant 3 qui obture une ouverture 4 dont les bords transversaux arrière 4a et avant 4b sont figurés par des lignes pointillées verticales sur les figures 2 à 5. Dans la position fermée représentée figures 3 et 5, l'ouvrant 3 s'étend dans la continuité du pavillon 1 au dessus de l'ouverture 4 qu'il obture complètement.

Le bord transversal arrière 3a de l'ouvrant 3, dirigé vers l'arrière du véhicule, présente une patte 5 s'étendant sensiblement sur toute la largeur de l'ouvrant, vers l'arrière du véhicule, et située légèrement au dessous de l'ouvrant. Cette patte 5 est conformée pour être glissée sous la partie supérieure de la porte battante arrière 2 en position fermée (figure 5), assurant ainsi un verrouillage de l'ouvrant en position fermée. Le bord transversal arrière 3a est alors adjacent à la porte 2. Un joint 6 disposé sur le bord transversal arrière de cette patte 5 assure l'étanchéité de l'ouvrant avec la porte 2. Afin d'assurer la fixation en position fermée de l'ouvrant, on peut également prévoir un crochet 7 solidaire du dessous de la patte 5 et destiné à venir en prise avec une barre transversale 8 supportée par la structure du véhicule et située le long du bord transversal arrière de l'ouverture 4 (figures 4 et 5). Dans la position ouverte représentée figure 4, cette barre transversale 8 permet de supporter un objet E dépassant de l'ouverture et placé incliné dans le véhicule (représenté en pointillés sur cette figure).

Deux pattes 9 saillant de la face inférieure de l'ouvrant à proximité de son bord transversal arrière et situées de part et d'autre de l'ouvrant suivant la direction transversale, supportent chacune un chariot arrière 10. Dans l'exemple, ces pattes de support 9 sont solidaires de la patte transversale 5. Les chariots arrière 10 sont articulés aux pattes 9 autour d'un même axe transversal 11.

Sur le bord transversal avant 3b de l'ouvrant, dirigé vers l'avant du véhicule, sont montés rigidement deux chariots avant 12, de part et d'autre de l'ouvrant suivant la direction transversale.

Chaque chariot arrière 10 coulisse dans un rail arrière 13 qui s'étend depuis le bord transversal arrière 4a de l'ouverture, ou à proximité de celui-ci, vers l'avant du véhicule. Ces rails arrière 13 s'étendent sensiblement dans la direction longitudinale du véhicule et sont fixés sur la structure du véhicule de part et d'autre de l'ouverture. L'extrémité arrière 13a des rails arrière est inclinée vers l'intérieur et l'arrière du véhicule, en dessous du plan des rails arrière (figures 4 et 5), formant ainsi une sorte de crosse.

Chaque chariot avant 12 coulisse dans un rail avant 14 solidaire de la face supérieure du pavillon 1. Chaque rail avant 14 s'étend dans la direction longitudinale du véhicule depuis le bord transversal avant de l'ouverture 4, ou à proximité de celui-ci, vers l'avant de ce dernier. Les rails avant sont situés dans un même plan sensiblement horizontal, situé légèrement au dessus du plan des rails arrière.

Les rails avant 14 et la partie rectiligne des rails arrière 13 présentent de préférence sensiblement la même longueur, identique à la dimension de l'ouvrant dans la direction longitudinale, tel que visible sur les figures 2 à 5, de manière à permettre le dégagement total de l'ouverture. L'extrémité courbée du rail arrière s'étend alors au delà du bord arrière 4a de l'ouverture, de sorte que chariot arrière s'étend également en arrière du bord 4a de l'ouverture et du bord arrière 3a de l'ouvrant dans la position fermée. Dans l'exemple, la longueur des rails avant et arrière est également choisie de sorte que, lorsque l'ouvrant 3 est en position fermée, les chariots arrière 10 et avant 12 sont situés aux extrémités arrière des rails arrière 13 et avant 14 respectivement, et lorsque l'ouvrant 3 est en position ouverte, les chariots arrière 10 et avant 12 sont situés aux extrémités avant des rails 13 et 14 respectivement.

Chaque chariot arrière 10 présente une forme de triangle à trois angles aigus. Deux des sommets étant chacun pourvu d'un galet 15 (figure 5) ou similaire pouvant coulisser dans les rails arrière 13, et le troisième sommet aigu portant l'axe 11 solidaire des pattes 9 de l'ouvrant.

Les chariots et rails arrière forment ainsi des moyens de guidage arrière en débattement longitudinal et vertical du bord transversal arrière de l'ouvrant. Ils permettent de relier l'ouvrant à la structure du véhicule de part et d'autre de l'ouverture, depuis le bord transversal arrière (4a) de l'ouverture vers l'avant du véhicule de sorte qu'un déplacement de l'ouvrant de l'arrière vers l'avant du véhicule libère l'accès à l'ouverture.

Les chariots avant 12 sont chacun formés d'un bras sensiblement rectiligne s'étendant suivant la direction longitudinale du véhicule en avant de l'extrémité avant 3b de l'ouvrant, sensiblement dans le même plan que celui-ci, tel que visible sur les figures 2 et 3. L'extrémité libre de chaque bras supporte un galet 15' coulissant dans le rail avant 13. Ainsi, dans la position fermée, les chariots avant 12 s'étendent dans la continuité du pavillon et de l'ouvrant tel que visible sur les figures 3 et 5. Une rainure 19 (figure 2) est alors ménagée sur la surface supérieure du pavillon, dans le prolongement de chaque rail avant 14 de manière à loger le chariot avant 12 lorsque l'ouvrant est en position fermée.

La forme coudée de l'extrémité arrière 13a des rails arrière, la forme des chariots arrière 10 ainsi que la forme des pattes 5 sont choisies de manière à ce que, en position fermée, l'ouvrant 3 s'étende sensiblement dans la continuité du pavillon 1 (figures 3 et 5) et à ce que, en position ouverte, l'ouvrant 3 puisse être situé au dessus du pavillon. Ainsi, la hauteur des chariots arrière 10 est suffisante pour permettre de faire coulisser l'ouvrant au dessus du pavillon. L'extrémité coudée 13a du rail arrière, ainsi que la liaison rigide entre les chariots avant et l'ouvrant, permettent de faire pivoter l'ouvrant autour d'un axe confondu avec l'axe des galets 15' des chariots avant, entre une position basse dans laquelle l'ouvrant est fermé dans la continuité du pavillon et une position haute inclinée par rapport à la direction longitudinale du véhicule. L'angle d'inclinaison entre l'ouvrant et la direction longitudinale du véhicule est plus faible que l'angle d'inclinaison d'un ouvrant entrebâillant selon l'état de la technique, ce qui permet d'améliorer la pénétration dans l'air du véhicule.

Un ou deux vérins d'assistance à l'ouverture de l'ouvrant, ou bien un système de biellettes, peuvent être reliés à l'ouvrant de manière à faciliter sa manipulation.

Dans l'exemple, l'extrémité avant des rails arrière, coïncidant sensiblement avec le bord avant de l'ouverture 4, se situe sensiblement au dessus d'une traverse 16 de la structure du véhicule (figures 2 à 5).

Un système de verrouillage de l'ouvrant en position ouverte peut également être prévu afin d'éviter sa fermeture intempestive lors du roulage du véhicule. Dans l'exemple, ce système comprend un élément de retenue 17 maintenu saillant à l'intérieur de l'extrémité avant du rail arrière par une lame élastique 18 fixée sous le rail, un orifice étant prévu à cet effet dans la face inférieure du rail. Dans l'exemple, cet élément est un galet 17. Le galet 17 est placé de manière à venir bloquer l'un des galets 15 du chariot arrière 10, lorsque ce dernier est placé au niveau de cette extrémité avant, tel que visible sur la figure 2, en aval du galet 17 dans le sens d'ouverture de l'ouvrant. La lame élastique 18 est montée sous le rail vers l'arrière du véhicule par rapport au galet de blocage 17, de sorte que le coulissement du chariot de l'arrière vers l'avant (sens de l'ouverture) repousse le galet hors du rail, et que le coulissement du chariot de l'avant vers l'arrière (fermeture) s'oppose à une résistance du galet et de la lame. Il suffit alors d'abaisser la lame 18 pour refermer l'ouvrant.

De préférence, le bord transversal avant 3b de l'ouvrant peut être pourvu d'un joint (non représenté) venant en contact avec le pavillon en position ouverte, de manière à limiter, voire empêcher, le passage d'air entre le pavillon et l'ouvrant dans la position ouverte. La génération de bruit dû au refoulage de l'air est ainsi réduite dans cette position.

Avantageusement pour l'adaptation d'un ouvrant selon l'invention à des profils variés de pavillon, les rails avant 14 et les rails arrières 13 sont différents et indépendants l'un de l'autre. De plus, les chariots avant 12 et les chariots arrière 10 sont des moyens de guidage de nature différente. L'indépendance des rails ainsi que la nature différente des moyens de guidage sont avantageux pour la liberté du choix dans le débattement de l'ouvrant, au bénéfice de l'adaptation d'un ouvrant selon l'invention à des profils variés de pavillon.

Bien entendu, d'autres modes de réalisation des chariots et des moyens de retenue peuvent être envisagés sans sortir du cadre de l'invention.

## Revendications

1. Ouvrant de véhicule automobile (3), destiné à obturer une ouverture (4) du pavillon et pourvu d'un mécanisme d'ouverture apte à le déplacer entre une position fermée dans laquelle il obture complètement l'ouverture, et une position ouverte en avant de la position fermée, dans laquelle il libère au moins partiellement le dessus de l'ouverture en avant, où le mécanisme d'ouverture comprend :
- deux rails longitudinaux avant (14) s'étendant depuis un bord transversal de l'ouverture, ou à proximité de ce dernier, en s'éloignant de l'ouverture, les rails avant s'étendant sensiblement dans un même plan sensiblement horizontal sur une longueur suffisante pour permettre le déplacement de l'ouvrant entre les positions fermée et ouverte,
**caractérisé par** - deux chariots avant (12) coulissant dans les rails avant, et montés rigidement sur l'extrémité avant de l'ouvrant, leur partie coulissant dans les rails étant située en avant de l'extrémité avant de l'ouvrant, les chariots avant guidant l'extrémité avant de l'ouvrant avec un débattement vertical lors du passage de la position fermée à la position ouverte, et par
- des moyens de guidage arrière en débattement longitudinal et vertical du bord transversal arrière de l'ouvrant (3) lors du passage de la position fermée à la position ouverte.

2. Ouvrant selon la revendication 1, **caractérisé en ce que** les chariots avant (12) sont sensiblement rectilignes et s'étendent sensiblement dans le prolongement de l'ouvrant.

3. Ouvrant selon la revendication 1 ou 2, **caractérisé en ce que** chaque chariot avant (12) est un bras dont l'extrémité libre supporte un galet (15') coulissant dans un rail avant (13).

4. Ouvrant selon l'une des revendications 1 à 3, **caractérisé en ce que** les moyens de guidage arrière comprennent :
- deux rails longitudinaux arrière (13) s'étendant depuis l'autre bord transversal de l'ouverture par rapport aux rails avant, l'extrémité arrière (13a) des rails arrière étant inclinée vers le bas et l'arrière.
- deux chariots arrière (10) coulissant dans les rails arrière, et montés articulés sur l'extrémité arrière de l'ouvrant.

5. Ouvrant selon la revendication 4, **caractérisé en ce que** chaque chariot arrière (10) présente une forme sensiblement triangulaire dont deux sommets sont pourvus d'un galet (15) coulissant dans un rail arrière et le troisième sommet est articulé sur l'extrémité arrière de l'ouvrant.

6. Ouvrant selon la revendication 5, **caractérisé en ce que** les chariots arrière (10) sont articulés sur des pattes (9) solidaires de l'extrémité arrière de l'ouvrant, saillant de la face inférieure de ce dernier.

7. Ouvrant selon l'une des revendications 1 à 6, **caractérisé en ce que** le mécanisme d'ouverture est pourvu d'un système de verrouillage en position ouverte.

8. Ouvrant selon la revendication 7 lorsqu'elle dépend de l'une des revendications 4 à 6, **caractérisé en ce que** le système de verrouillage est formé d'au moins un élément de retenue (17) fixé sous l'extrémité avant d'un rail arrière (13) et supporté par un élément formant ressort (18) le maintenant en saillie à l'intérieur du rail par un orifice prévu à cet effet, et **en ce que** chaque chariot arrière (13) est conçu de manière à venir en prise avec l'élément de retenue.

9. Ouvrant selon l'une des revendications 1 à 8, **caractérisé en ce que** l'extrémité arrière de l'ouvrant (3a) est pourvue d'un système de fixation apte à coopérer avec le véhicule en position fermée.

10. Véhicule **caractérisé en ce qu'**il est pourvu d'un ouvrant selon l'une des revendications 1 à 9 destiné à obturer une ouverture située à proximité de son extrémité arrière, dans lequel les rails avant (14) sont fixés sur le pavillon de part et d'autre de l'ouvrant et s'étendent depuis le bord transversal avant (4b) de l'ouverture, ou à proximité de ce dernier, vers l'avant du véhicule.

11. Véhicule selon la revendication 10, **caractérisé en ce que** les moyens de guidage arrière sont conçus de manière à relier l'ouvrant à la structure du véhicule de part et d'autre de l'ouverture, depuis le bord transversal arrière (4a) de l'ouverture vers l'avant du véhicule de sorte qu'un déplacement de l'ouvrant de l'arrière vers l'avant du véhicule libère l'accès à l'ouverture.

12. Véhicule selon la revendication 10 ou 11, **caractérisé en ce que** le bord transversal arrière de l'ouvrant est adjacent au bord supérieur d'une paroi latérale transversale verticale ouvrante du véhicule.

## Claims

1. Motor vehicle opening panel (3) for closing off an opening (4) in the roof and equipped with an opening mechanism able to move it between a closed position in which it completely closes off the opening and an open position forward of the closed position, in which it at least partially releases the top of the opening at the front, where the opening mechanism comprising:
- two front longitudinal rails (14) extending from a transverse edge of the opening, or close to the latter, away from the opening, the front rails extending approximately in the same approximately horizontal plane over a length sufficient to move the opening panel between the closed and open positions,
**characterized by**
- two front carriages (12) sliding in the front rails and fitted rigidly to the front end of the opening panel, the part of the carriages which slides in the rails being located forward of the front end of the opening panel, the front carriages guiding the front end of the opening panel with a vertical travel as it moves from the closed position to the open position, and by
- rear guide means for longitudinal and vertical travel of the rear transverse edge of the opening panel (3) as it moves from the closed position to the open position.

2. Opening panel according to Claim 1, **characterized in that** the front carriages (12) are approximately rectilinear and extend approximately in line with the opening panel.

3. Opening panel according to Claim 1 or 2,
**characterized in that** each front carriage (12) is an arm whose free end supports a roller (15') sliding in a front rail (13).

4. Opening panel according to one of Claims 1 to 3, **characterized in that** the rear guide means comprise:
- two rear longitudinal rails (13) extending from the other transverse edge of the opening with respect to the front rails, the rear end (13a) of the rear rails being inclined downwards and rearwards, and
- two rear carriages (10) sliding in the rear rails and fitted in a hinged manner to the rear end of the opening panel.

5. Opening panel according to Claim 4, **characterized in that** each rear carriage (1) has an approximately triangular shape, two vertices of which are equipped with a roller (15) sliding in a rear rail and the third vertex of which is hinged to the rear end of the opening panel.

6. Opening panel according to Claim 5, **characterized in that** the rear carriages (10) are hinged to integral tabs (9) on the rear end of the opening panel which protrude from the lower surface of the latter.

7. Opening panel according to one of Claims 1 to 6, **characterized in that** the opening mechanism is equipped with a system for locking it in the open position.

8. Opening panel according to Claim 7, when it depends on one of Claims 4 to 6, **characterized in that** the locking system consists of at least one retaining element (17) fastened under the front end of a rear rail (13) and supported by a spring element (18) keeping it protruding into the rail through an orifice provided for that purpose, and **in that** each rear carriage (13) is designed to come into engagement with the retaining element.

9. Opening panel according to one of Claims 1 to 8, **characterized in that** the rear end (3a) of the opening panel is equipped with a fastening system able to engage with the vehicle in the closed position.

10. Vehicle, **characterized in that** it is equipped with an opening panel according to one of Claims 1 to 9 for closing off an opening located close to its rear end, in which the front rails (14) are fastened on the roof on either side of the opening panel and extend from the front transverse edge (4b) of the opening, or close to said edge (4b), towards the front of the vehicle.

11. Vehicle according to Claim 10, **characterized in that** the rear guide means are designed such as to connect the opening panel to the vehicle structure on either side of the opening, from the rear transverse edge (4a) of the opening towards the front of the vehicle such that a movement of the opening panel from the rear towards the front of the vehicle opens up access to the opening.

12. Vehicle according to Claim 10 or 11, **characterized in that** the rear transverse edge of the opening panel is adjacent to the upper edge of an opening vertical transverse side wall of the vehicle.

## Patentansprüche

1. Kraftfahrzeugschiebedach (3), das dazu vorgesehen ist, eine Öffnung (4) des Fahrzeugdachs zu verschließen, und mit einem Öffnungsmechanismus versehen ist, der es zwischen einer geschlossenen Position, in der es die Öffnung vollständig verschließt, und einer geöffneten Position vor der geschlossenen Position, in der es die Oberseite der Öffnung wenigstens teilweise nach vorn freimacht, verlagern kann, wobei der Öffnungsmechanismus enthält:
- zwei vordere longitudinale Schienen (14), die sich von einem transversalen Rand der Öffnung oder von der Umgebung dieses Letzteren erstrecken, wobei sie sich von der Öffnung entfernen, wobei sich die vorderen Schienen im Wesentlichen in derselben im Wesentlichen horizontalen Ebene über eine Länge erstrecken, die ausreicht, um die Verlagerung des Schiebedachs zwischen der geschlossenen und der geöffneten Position zu ermöglichen,
**gekennzeichnet durch**
- zwei vordere Schlitten (12), die in den vorderen Schienen gleiten und am vorderen Ende des Schiebedachs starr angebracht sind, wobei sich ihr in den Schienen gleitender Abschnitt vor dem vorderen Ende des Schiebedachs befindet, wobei die vorderen Schlitten das vordere Ende des Schiebedachs so führen, dass beim Übergang von der geschlossenen Position in die geöffneten Position ein vertikaler Hub erfolgt, und **durch**
- hintere Mittel für die Führung des longitudinalen und des vertikalen Hubs des hinteren transversalen Rands des Schiebedachs (3) beim Übergang aus der geschlossenen Position in die geöffnete Position.

2. Schiebedach nach Anspruch 1, **dadurch gekennzeichnet, dass** die vorderen Schlitten (12) im Wesentlichen geradlinig sind und sich im Wesentlichen in der Verlängerung des Schiebedachs erstrecken.

3. Schiebedach nach Anspruch 1 oder 2, **dadurch gekennzeichnet, dass** jeder vordere Schlitten (12) ein Arm ist, dessen freies Ende eine Rolle (15') unterstützt, die in einer vorderen Schiene (13) gleitet.

4. Schiebedach nach einem der Ansprüche 1 bis 3, **dadurch gekennzeichnet, dass** die hinteren Führungsmittel enthalten:
- zwei hintere longitudinale Schienen (13), die sich von dem anderen transversalen Rand der Öffnung in Bezug auf die vorderen Schienen erstrecken, wobei das hintere Ende (13a) der hinteren Schienen nach unten und nach hinten geneigt ist,
- zwei hintere Schlitten (10), die in den hinteren Schienen gleiten und am hinteren Ende des Schiebedachs schwenkbar angebracht sind.

5. Schiebedach nach Anspruch 4, **dadurch gekennzeichnet, dass** jeder hintere Schlitten (10) eine im Wesentlichen dreieckige Form aufweist, wovon zwei Ecken jeweils mit einer Rolle (15) versehen sind, die jeweils in einer hinteren Schiene gleitet, und eine dritte Ecke am hinteren Ende des Schiebedachs angelenkt ist.

6. Schiebedach nach Anspruch 5, **dadurch gekennzeichnet, dass** die hinteren Schlitten (10) an Beschlägen (9) angelenkt sind, die mit dem hinteren Ende des Schiebedachs fest verbunden sind und von der unteren Fläche dieses Letzteren vorstehen.

7. Schiebedach nach einem der Ansprüche 1 bis 6, **dadurch gekennzeichnet, dass** der Öffnungsmechanismus mit einem System zum Verriegeln in der geöffneten Position versehen ist.

8. Schiebedach nach Anspruch 7, wenn abhängig von einem der Ansprüche 4 bis 6, **dadurch gekennzeichnet, dass** das Verriegelungssystem wenigstens aus einem Halteelement (17) gebildet ist, das unter dem vorderen Ende einer hinteren Schiene (13) befestigt ist und durch ein Element, das eine Feder (18) bildet, unterstützt ist, wobei es durch das Halteelement so gehalten wird, dass dieses durch eine hierzu vorgesehene Öffnung in den Innenraum der Schiene vorsteht, und dass jeder hintere Schlitten (13) dazu ausgelegt ist, mit dem Halteelement in Eingriff zu gelangen.

9. Schiebedach nach einem der Ansprüche 1 bis 8, **dadurch gekennzeichnet, dass** das hintere Ende des Schiebedachs (3a) mit einem Befestigungssystem versehen ist, das mit dem Fahrzeug in der geschlossenen Position zusammenwirken kann.

10. Fahrzeug, **dadurch gekennzeichnet, dass** es mit einem Schiebedach nach einem der Ansprüche 1 bis 9 versehen ist, das dazu vorgesehen ist, eine in der Umgebung seines hinteren Endes vorhandene Öffnung zu verschließen, wobei die vorderen Schienen (14) am Fahrzeugdach beiderseits des Schiebedachs befestigt sind und sich von dem vorderen transversalen Rand (4b) der Öffnung oder von der Umgebung dieser Letzteren bezüglich des Fahrzeugs nach vorn erstrecken.

11. Fahrzeug nach Anspruch 10, **dadurch gekennzeichnet, dass** die hinteren Führungsmittel dazu ausgelegt sind, das Schiebedach mit dem Aufbau des Fahrzeugs beiderseits der Öffnung von der hinteren transversalen Kante (4a) der Öffnung in Richtung zur Vorderseite des Fahrzeugs in der Weise zu verbinden, dass eine Verlagerung des Schiebedachs von hinten nach vorn des Fahrzeugs den Zugang zur Öffnung freimacht.

12. Fahrzeug nach Anspruch 10 oder 11, **dadurch gekennzeichnet, dass** der hintere transversale Rand des Schiebedachs zum oberen Rand einer vertikalen, transversalen Türseitenwand des Fahrzeugs benachbart ist.
